# EUROPEAN PATENT APPLICATION

(11) **EP 4 760 800 A1**
(43) Date of publication of application: **17.06.2026**
(21) Application number: 25215654.2
(22) Date of filing: 13.11.2025
(51) Int. Cl.: H01M 4/133, H01M 4/38, H01M 4/48, H01M 4/587, H01M 10/0525, H01M 10/0587, H01M 50/538, H01M 4/36, H01M 4/134

(54) **ELECTRODE FOR SECONDARY BATTERY, SECONDARY BATTERY INCLUDING THE SAME, AND SLOT DIE COATER FOR MANUFACTURING THE SAME**

(30) Priority: 12.12.2024 KR 20240185050
(71) Applicant: SAMSUNG SDI CO., LTD., Yongin-si, Gyeonggi-do 17084 (KR)
(72) Inventor: KIM, Yongin, 17084 Yongin-Si (KR); KWAK, Junhyeok, 17084 Yongin-Si (KR); KIM, Sanggi, 17084 Yongin-Si (KR); KIM, Yongsoo, 17084 Yongin-Si (KR); KIM, Hyunchul, 17084 Yongin-Si (KR); AN, Eunjin, 17084 Yongin-Si (KR); HONG, Chan, 17084 Yongin-Si (KR)
(74) Representative: Maiwald GmbH

(57) **Abstract**

An electrode for a secondary battery includes a substrate, a first electrode active material layer on at least one surface of the substrate, the first electrode active material layer including a first electrode active material, and the first electrode active material including at least one of crystalline carbon, amorphous carbon, or combinations thereof, and a second electrode active material layer on at least one side of the first electrode active material layer, the second electrode active material layer including a second electrode active material, and the second electrode active material including at least one of silicon-carbon nanocomposite or silicon oxide.

## Description

### BACKGROUND

### 1. Field

The present disclosure relates to an electrode for a secondary battery, a secondary battery including the electrode, and a slot die coater for manufacturing the electrode.

### 2. Description of the Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A manufacturing process of a secondary battery may sequentially include an electrode plate process, an assembly process, and a formation process. The electrode plate process, which forms the positive electrode and the negative electrode, may be divided into a mixing process, a coating process, a pressing process, and a slitting process. The mixing process may produce a slurry by uniformly mixing an electrode active material that determines the polarity of the secondary battery with a conductive material, a binder, and a solvent. In the coating process, the uniformly mixed slurry may be applied to a surface of an electrode substrate (also referred to as a current collector) so as to maintain its shape. The coating process may include applying the slurry to the surface of the electrode substrate and then drying the coated layer.

The above information disclosed in this Background section is for enhancement of understanding of the background of the present disclosure, and therefore, it may contain information that does not constitute related (or prior) art.

### SUMMARY

According to some embodiments of the present disclosure, an electrode for a secondary battery includes a substrate, a first electrode active material layer formed by applying a first electrode active material on at least one surface of the substrate, and a second electrode active material layer formed by applying a second electrode active material on at least one side of the first electrode active material layer, wherein the first electrode active material includes at least one of crystalline carbon, amorphous carbon, or combinations thereof, and the second electrode active material includes at least one of silicon-carbon nanocomposite (SCN) or silicon oxide.

In some embodiments, wherein the first electrode active material layer may include a flat portion having a thickness of the first electrode active material within a predetermined range, and a sloped portion configured to have a thickness of the first electrode active material that decreases toward a surface of the substrate from the flat portion, wherein the second electrode active material layer may be formed adjacent to the sloped portion.

In some embodiments, the second electrode active material layer may cover at least a part of the sloped portion.

In some embodiments, the second electrode active material may include silicon in an amount ranging from 30 wt% to 50 wt% based on 100 wt% of the second electrode active material.

In some embodiments, a maximum thickness of the second electrode active material layer may be less than a maximum thickness of the first electrode active material layer.

In some embodiments, a product of an average thickness of the second electrode active material layer and a capacity of the second electrode active material may be equal to or greater than a product of an average thickness of the first electrode active material layer and a capacity of the first electrode active material.

In some embodiments, the electrode further may include a blocking layer formed by applying a blocking-layer slurry on one side of the second electrode active material layer.

In some embodiments, the blocking-layer slurry may include carboxymethyl cellulose (CMC).

In some embodiments, the blocking layer may be formed by removing moisture from the blocking-layer slurry.

In some embodiments, the blocking-layer slurry may have a solid content of 1 wt% to 10 wt% based on a total weight of the blocking layer slurry.

In some embodiments, a maximum thickness of the blocking layer may be less than a maximum thickness of the second electrode active material layer.

According to some embodiments of the present disclosure, a secondary battery includes an electrode assembly including a positive electrode, a negative electrode, and a separator disposed between the positive electrode and the negative electrode, and a case accommodating the electrode assembly, wherein the negative electrode includes a substrate, a first electrode active material layer formed by applying a first electrode active material on at least one surface of the substrate, and a second electrode active material layer formed by applying a second electrode active material on at least one side of the first electrode active material layer, wherein the first electrode active material includes at least one of crystalline carbon, amorphous carbon, or combinations thereof, and the second electrode active material includes at least one of silicon-carbon nanocomposite (SCN) or silicon oxide.

### BRIEF DESCRIPTION OF THE DRAWINGS

The following drawings attached to this specification illustrate embodiments of the present disclosure, and further describe aspects and features of the present disclosure together with the detailed description of the present disclosure. Thus, the present disclosure should not be construed as being limited to the drawings.
FIG. 1 is a perspective exploded view illustrating a secondary battery according to some embodiments of the present disclosure.
FIG. 2 is a cross-sectional view illustrating an electrode for a secondary battery according to some embodiments of the present disclosure.
FIG. 3 is a plan view looking down at the electrode of FIG. 2.
FIG. 4 is a cross-sectional view illustrating an electrode for a secondary battery according to some embodiments of the present disclosure.
FIG. 5 is a cross-sectional view illustrating an electrode for a secondary battery according to some embodiments of the present disclosure.
FIG. 6 is a plan view looking down at the electrode of FIG. 4.
FIG. 7 is a cross-sectional view illustrating a slot die coater according to some embodiments of the present disclosure.
FIG. 8 is an exploded perspective view illustrating a slot die coater according to some embodiments of the present disclosure.
FIG. 9 is a schematic diagram illustrating a first spacer according to some embodiments of the present disclosure.
FIG. 10 is a schematic diagram illustrating a second spacer according to some embodiments of the present disclosure.
FIG. 11 is a schematic diagram illustrating a third spacer according to some embodiments of the present disclosure.
FIG. 12 is a schematic perspective view of a slot die coater and an electrode for a secondary battery according to some embodiments of the present disclosure.
FIG. 13 is a graph showing thickness measurements of an electrode for a secondary battery manufactured using a slot die coater according to some embodiments of the present disclosure.

### DETAILED DESCRIPTION

Hereinafter, embodiments of the present disclosure will be described in detail with reference to the accompanying drawings. Terms or words used in the present specification and claims should not be interpreted based on ordinary or dictionary meanings and should be interpreted as meanings and concepts consistent with the technical idea of the present disclosure, based on the principle that an inventor can serve as the lexicographer of the disclosure.

The embodiments described in this specification and the configurations shown in the drawings are merely some embodiments of the present disclosure and do not encompass the entire spirit, aspects, and features of the present disclosure. Accordingly, it should be understood that various equivalents and modifications capable of replacing or modifying the embodiments may be possible at the time of filing this application.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components".

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

In the present disclosure, sizes and relative sizes of layers and regions shown in the drawings may be exaggerated for clarity. Thus, the sizes shown in the drawings are merely for ease of understanding and are not limited thereto. The same reference numerals refer to the same components throughout the specification.

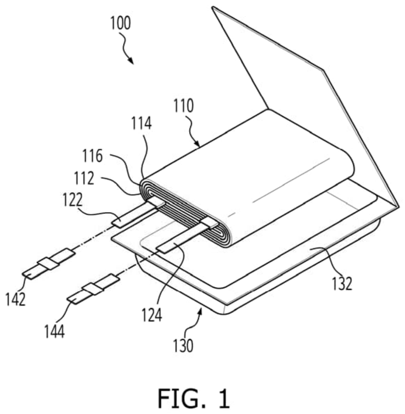

FIG. 1 illustrates, in an exploded perspective view, a secondary battery 100 according to some embodiments of the present disclosure. Referring to FIG. 1, the secondary battery 100 may include an electrode assembly 110 and a case 130 that accommodates the electrode assembly 110.

The electrode assembly 110 may include a first electrode 112, a second electrode 114, and a separator 116 disposed between the first electrode 112 and the second electrode 114. The first electrode 112 and the second electrode 114 may be wound with the separator 116 interposed therebetween. The first electrode 112 of the electrode assembly 110 may function as a negative electrode, and the second electrode 114 may function as a positive electrode. However, the opposite configuration is also possible.

The positive electrode and the negative electrode may each include a coated portion (where an active material is applied on a thin metal-foil current collector) and a non-coated portion (where no active material is applied). After the positive electrode and the negative electrode are wound with the separator, the electrode assembly may also be configured by alternately stacking multiple positive and negative electrode sheets with separators interposed therebetween.

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material). For example, the positive electrode may further include an additive that can serve as a sacrificial positive electrode.

For example, an amount of the positive electrode active material may be about 90 wt% to about 99.5 wt% based on 100 wt% of the positive electrode active material layer. Amounts of the binder and the conductive material may be about 0.5 wt% to about 5 wt%, respectively, based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, as non-limiting examples.

The conductive material may be used to impart conductivity (e.g., electrical conductivity) to the electrode. Any material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum, silver, etc., in a form of a metal powder or a metal fiber; a conductive polymer such as a polyphenylene derivative; or a mixture thereof.

Aluminum may be used as the current collector.

The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and the like.

The negative electrode for a rechargeable lithium battery may include a current collector and a negative electrode active material layer on the current collector. The negative electrode active material layer may include a negative electrode active material, and may further include a binder and/or a conductive material (e.g., an electrically conductive material).

For example, the negative electrode active material layer may include about 90 wt% to about 99 wt% of the negative electrode active material, about 0.5 wt% to about 5 wt% of the binder, and about 0 wt% to about 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrine, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resins, polyvinyl alcohol, and a combination thereof.

When an aqueous binder is used as the negative electrode binder, a cellulose-based compound capable of imparting viscosity may be further included. The cellulose-based compound may include at least one of carboxymethyl cellulose, hydroxypropylmethyl cellulose, methyl cellulose, or an alkali metal salt thereof. The alkali metal may include Na, K, or Li.

The dry binder may be a polymer material that is capable of being fibrous. For example, the dry binder may be polytetrafluoroethylene, polyvinylidene fluoride, a polyvinylidene fluoride-hexafluoropropylene copolymer, polyethylene oxide, or a combination thereof.

The conductive material may be used to impart conductivity (e.g., electrical conductivity) to the electrode. Any material that does not cause chemical change (e.g., does not cause an undesirable chemical change in the rechargeable lithium battery) and that conducts electrons can be used in the battery. Non-limiting examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder or a metal fiber; a conductive polymer such as a polyphenylene derivative; or a mixture thereof.

The negative current collector may include a copper foil, a nickel foil, a stainless steel foil, a titanium foil, a nickel foam, a copper foam, a polymer substrate coated with a conductive metal, or a combination thereof.

The separator may include a porous substrate and a coating layer including an organic material, an inorganic material, or a combination thereof on one or both surfaces of the porous substrate.

The porous substrate may be a polymer film formed of any one selected polymer polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON^{®}, and polytetrafluoroethylene, or a copolymer or mixture of two or more thereof.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y2O₃, SrTiO₃, BaTiO₃, Mg(OH)₂, boehmite, and a combination thereof.

The organic material and the inorganic material may be mixed in one coating layer, or a coating layer including an organic material and a coating layer including an inorganic material may be stacked.

A first electrode tab 122 may be connected to a non-coated portion of the first electrode 112 where no electrode active material is coated, and a second electrode tab 124 may be provided at a non-coated portion of the second electrode 114. The first electrode tab 122 and the second electrode tab 124 may be welded to a first lead tab 142 and a second lead tab 144 of an external terminal, thereby being electrically connected to the outside. A tab film may be attached to each of the first lead tab 142 and the second lead tab 144 for insulation from the case 130.

The case 130 accommodates the electrode assembly 110, and edge sealing portions 132 of the case may be sealed together. In this case, a tab film may be disposed between the sealing portions 132. The sealing portions 132 may be formed of a heat-seal material, and sealing may be performed by bonding heat-seal layers together.

In FIG. 1, the case 130 is illustrated as a pouch-type case and the secondary battery 100 as a pouch-type secondary battery. However, the secondary battery 100 may be of any suitable type, e.g., a prismatic or cylindrical secondary battery.

The secondary battery 100 may be, e.g., a lithium battery cell, a sodium battery cell, or other types of secondary batteries. However, the secondary battery 100 may include any battery capable of repeatedly providing electricity through charging and discharging. In one embodiment, when the secondary battery 100 is a lithium battery cell, its excellent cycle characteristics and high-rate characteristics allow it to be used in electric vehicles (EV), e.g., plug-in hybrid electric vehicles (PHEV). Lithium battery cells may also be used in various power storage fields requiring a range of power capacities, e.g., smartphones, tablet PCs, electric bicycles, and power tools.

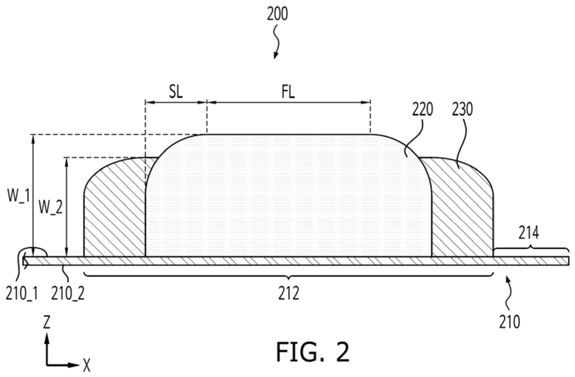

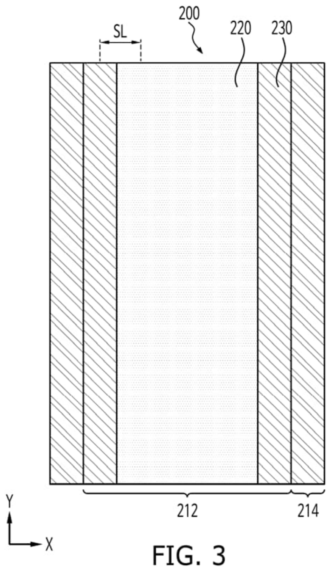

FIG. 2 is a cross-sectional view illustrating an electrode 200 for a secondary battery according to some embodiments of the present disclosure, and FIG. 3 is a plan view of the electrode 200 of FIG. 2. The electrode 200 as shown FIGS. 2 and 3 may include the same or similar configuration as at least one of the first electrode 112 or the second electrode 114 of FIG. 1. In the following description, a configuration including a first electrode active material layer 220 and a second electrode active material layer 230 may also be referred to as a composite active material layer.

Referring to FIGS. 2 and 3, the electrode 200 may include a substrate 210, the first electrode active material layer 220 formed by applying a first electrode active material on at least one surface of the substrate 210, and the second electrode active material layer 230 formed by applying a second electrode active material on at least one side of the first electrode active material layer 220.

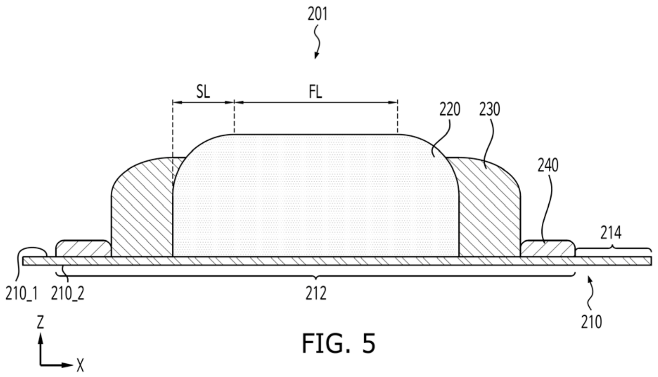

The electrode 200 may include a coated portion 212 and a non-coated portion 214. The non-coated portion 214 may refer to a region on the substrate 210 where no material is applied. For example, the non-coated portion 214 may refer to a region other than a region where a blocking layer (e.g., a blocking layer 240 described below with reference to FIG. 5) and/or the coated portion 212 are disposed on the substrate 210. This region may be processed into an electrode tab of the secondary battery or electrically connected to a separate electrode tab. The electrode tab may serve as a current collector connected to a terminal of the secondary battery. For example, the electrode tab may be the first electrode tab 122 or the second electrode tab 124 illustrated in FIG. 1.

For example, the electrode 200 may function as a negative electrode. In this case, the substrate 210 may include, e.g., a copper foil or a nickel foil. However, the electrode 200 may function as a positive electrode, in which case the substrate 210 may include, e.g., an aluminum foil.

The first electrode active material layer 220 may be formed by applying the first electrode active material on a first surface 210_1 of the substrate 210. For example, when the electrode 200 functions as a negative electrode, the first electrode active material may include graphite. In another example, the first electrode active material may include at least one selected from crystalline carbon, amorphous carbon, and combinations thereof.

The second electrode active material layer 230 may be formed by applying the second electrode active material on (e.g., directly on) the first surface 210_1 of the substrate 210 (e.g., the first and second electrode active material layers 220 and 230 may be formed directly on a same surface of the substrate 210). For example, the second electrode active material layer 230 may be formed by applying the second electrode active material on (e.g., directly on) at least one side of the first electrode active material layer 220. In another example, the second electrode active material layer 230 may be formed on (e.g., directly on) both sides of the first electrode active material layer 220. The second electrode active material may include at least one selected from a silicon-carbon nanocomposite (SCN) and silicon oxide (SiOₓ). The second electrode active material may include silicon in an amount of 30 wt% to 50 wt% based on 100 wt% of the second electrode active material. Silicon contained in the second electrode active material may have a higher energy capacity than graphite contained in the first electrode active material. Accordingly, by coating the second electrode active material layer 230, a loss in N/P ratio that may occur when the first electrode active material layer 220 is coated may be compensated.

The first electrode active material layer 220 may include a flat portion FL where a thickness of the first electrode active material is within a predetermined range (e.g., as measured along the Z-axis direction from the first surface 210_1 of the substrate 210). In this regard, formation "within a predetermined range" means that a uniform thickness is maintained (e.g., the flat portion FL has a constant thickness as measured from the first surface 210_1 of the substrate 210). The first electrode active material layer 220 may further include a sloped portion SL formed such that the thickness of the first electrode active material decreases toward the surface of the substrate 210 from the flat portion FL. The sloped portion SL may extend downwardly from the flat portion FL toward the surface of the substrate 210. For example, the second electrode active material layer 230 may be formed adjacent to the sloped portion SL, i.e., the second electrode active material layer 230 may cover (e.g., may directly contact and overlap) at least a portion of the sloped portion SL. In another example, the second electrode active material layer 230 may entirely cover the sloped portion SL.

The first electrode active material layer 220 may define the direction from the flat portion FL along the surface of the substrate 210 as the width direction of the electrode 200 for the secondary battery (e.g., along the X-axis direction). In this case, a length of the first electrode active material layer 220 in the width direction of the electrode 200 may be greater than a length of the second electrode active material layer 230 in the width direction of the electrode 200.

A direction perpendicular to the width direction (e.g., the X-axis direction) of the electrode 200 may be defined as a thickness direction (e.g., along the Z-axis direction) of the electrode 200. In this case, a maximum thickness W_2 of the second electrode active material layer 230 in the thickness direction of the electrode 200 may be less than a maximum thickness W_1 of the first electrode active material layer 220 in the thickness direction of the electrode 200.

An average thickness of each electrode active material layer may be calculated by averaging thickness values measured at different positions along the width direction of the electrode 200. A product of the average thickness of the second electrode active material layer 230 and a capacity of the second electrode active material may be equal to or greater than a product of the average thickness of the first electrode active material layer 220 and a capacity of the first electrode active material. That is, even if the average thickness of the second electrode active material layer 230 is smaller than the average thickness of the first electrode active material layer 220, the capacity of the second electrode active material may be greater than the capacity of the first electrode active material. For example, when the electrode 200 functions as a negative electrode, the second electrode active material may include at least one selected from a silicon-carbon nanocomposite (SCN) and silicon oxide (SiOₓ). By coating the second electrode active material layer 230 on at least one side of the first electrode active material layer 220, a loss in N/P ratio due to coating of the first electrode active material layer 220 may be compensated.

In addition, the second electrode active material layer 230 may also serve as a blocking layer that prevents the sloped portion SL of the first electrode active material layer 220 from excessively inclining downwardly. Accordingly, when the electrode 200 functions as either a positive electrode or a negative electrode, the second electrode active material layer 230 may suppress coating deviation of the first electrode active material layer 220 at the sloped portion SL.

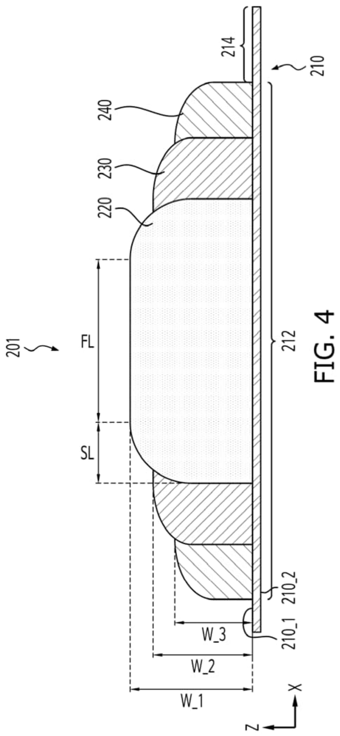

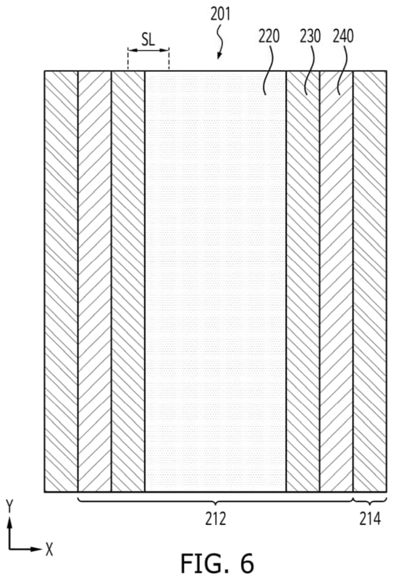

FIG. 4 is a cross-sectional view illustrating an electrode 201 for a secondary battery according to some embodiments of the present disclosure. FIG. 5 is a cross-sectional view illustrating a modified electrode 201, and FIG. 6 is a plan view looking down at the electrode 201 of FIG. 4. For convenience, configurations differing from those described with reference to FIGS. 1-3 will be mainly described.

Referring to FIGS. 4-6, the electrode 201 may further include a blocking layer 240 formed by applying a blocking-layer slurry on one side of the second electrode active material layer 230. A direction from the flat portion FL of the first electrode active material layer 220 toward the surface of the substrate 210 may be defined as a width direction of the electrode 200 (e.g., X-axis direction). In this case, the blocking layer may suppress the first electrode active material layer 220 and the second electrode active material layer 230 from flowing in the width direction (e.g., along the X-axis direction) of the electrode 200.

A material of the blocking-layer slurry may be selected to impart surface tension to the first electrode active material layer 220 and the second electrode active material layer 230, to be fixed on the substrate 210, and to induce flow-rate control of the first electrode active material layer 220 and the second electrode active material layer 230. For example, the blocking-layer slurry may include a water-soluble polymer, e.g., carboxymethyl cellulose.

For example, the blocking-layer slurry may further include at least one selected from sodium carboxymethyl cellulose (SCMC), potassium carboxymethyl cellulose (KCMC), calcium carboxymethyl cellulose (CaCMC), and ammonium carboxymethyl cellulose, or combinations thereof.

In some embodiments, a viscosity of the blocking-layer slurry may be equal to or greater than a viscosity of the first electrode active material layer 220 and a viscosity of the second electrode active material layer 230. For example, the viscosity of the blocking-layer slurry may be about 0 % to about 20 % greater than the viscosity of the first electrode active material layer 220 and the viscosity of the second electrode active material layer 230. In this case, the blocking-layer slurry and the first and second electrode active material layers may mix with each other due to surface tension, thereby improving the sloped shapes of the first electrode active material layer 220 and the second electrode active material layer 230.

The blocking layer 240 may be formed by removing moisture from the blocking-layer slurry. The blocking-layer slurry may have a solid content of 1 wt% to 10 wt% based on a total weight of the blocking-layer slurry. Accordingly, a thickness of the blocking layer 240 (e.g., along the Z-axis direction) may vary depending on the degree of moisture removal. A thickness of the blocking layer 240 may refer to a length of the blocking layer 240 in a direction perpendicular to the width direction of the electrode 200 (e.g., along the Z-axis direction).

As described above, the direction perpendicular to the width direction of the electrode 200 may be defined as a thickness direction of the electrode 200 (e.g., along the Z-axis direction). In this case, the maximum thickness W_2 of the second electrode active material layer 230 in the thickness direction of the electrode 200 may be less than the maximum thickness W_1 of the first electrode active material layer 220 in the thickness direction of the electrode 200. A maximum thickness W_3 of the blocking layer 240 in the thickness direction of the electrode 200 may be less than the maximum thickness W_2 of the second electrode active material layer 230 in the thickness direction of the electrode 200.

A direction from the flat portion FL of the first electrode active material layer 220 along the surface of the substrate 210 may be defined as the width direction of the electrode 200 (e.g., the X-axis direction). In this case, a length of the first electrode active material layer 220 in the width direction of the electrode 200 may be greater than the lengths (e.g., combined lengths) of the second electrode active material layer 230 and the blocking layer 240 in the width direction of the electrode 200. For example, a length of the second electrode active material layer 230 in the width direction of the electrode 200 may be less than or greater than a length of the blocking layer 240 in the width direction of the electrode 200. In another example, the lengths of the second electrode active material layer 230 and the blocking layer 240 may be equal to each other. Consequently, by forming the second electrode active material layer 230 and the blocking layer 240, an inclined shape of electrode active material in the width direction of the electrode 200 may be suppressed, thereby reducing a possibility of electrode-quality deterioration and/or a possibility of a short circuit or fire in the secondary battery.

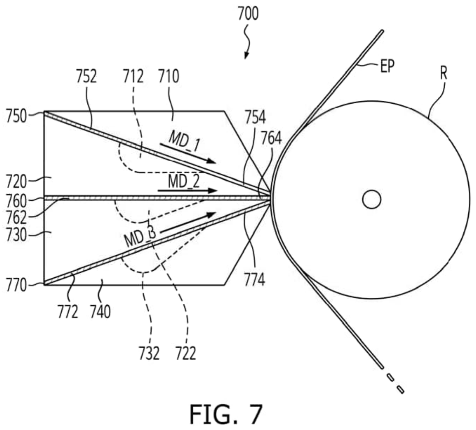

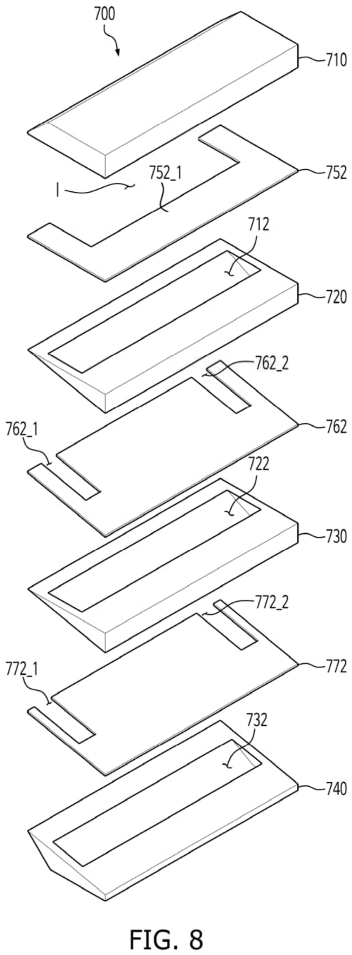

FIG. 7 is a cross-sectional view illustrating a slot die coater 700 according to some embodiments of the present disclosure, and FIG. 8 is an exploded perspective view illustrating the slot die coater 700.

Referring to FIGS. 7 and 8, a substrate EP may be wound on a roll R and conveyed. Hereinafter, a slot die coater 700 disposed on the substrate EP conveyed while being wound on the roll R will be described. A fourth die block 740 and a third spacer 772 may be omitted below.

Referring to FIGS. 7 and 8, the slot die coater 700 may include a first die block 710, a second die block 720, a third die block 730, a fourth die block 740, a first spacer 752, a second spacer 762, and a third spacer 772. A first slot 750 may be formed by coupling the first die block 710 and the second die block 720. A second slot 760 may be formed by coupling the second die block 720 and the third die block 730. A third slot 770 may be formed by coupling the third die block 730 and the fourth die block 740. In FIGS. 7 and 8, the first die block 710 is disposed at an upper side and the fourth die block 740 is disposed at a lower side. However, the configuration of the die blocks may vary, e.g., the fourth die block 740 may be disposed at the upper side and the first die block 710 at the lower side.

The slot die coater 700 may be disposed adjacent to one surface of the substrate EP, which is conveyed while being wound, so that the materials discharged through the first discharge port 754, the second discharge port 764, and the third discharge port 774 can be directly coated on the substrate EP in a specific pattern. The substrate EP may be a reel-type metal thin film or metal film. For example, the substrate EP may be an electrode substrate that can be used in an electrode assembly of a secondary battery. For example, copper may be used as a negative-electrode substrate, and aluminum, nickel, or stainless steel may be used as a positive-electrode substrate. In an embodiment, the substrate EP may be continuously conveyed by the rotation of the roll R, and the slot die coater 700 can continuously coat electrode active material slurries and a separator slurry onto the conveyed substrate EP. For instance, referring to FIGS. 1-6, the slot die coater 700 may coat the first electrode active material, second electrode active material, and separator slurry to form the first electrode active material layer 220, the second electrode active material layer 230, and the separator layer 240.

The first die block 710 and the second die block 720 may be assembled with a predetermined separation distance therebetween to form the first slot 750. The second die block 720 and the third die block 730 may be assembled with a predetermined separation distance therebetween to form the second slot 760. The third die block 730 and the fourth die block 740 may be assembled with a predetermined separation distance therebetween to form the third slot 770. The first, second, and third slots 750, 760, and 770 are empty spaces with certain widths or heights and may be isolated from one another.

The first die block 710 and the second die block 720 may each have a wedge-shaped cross-section whose thickness gradually decreases toward the first discharge port 754. Likewise, the second die block 720 and the third die block 730 may each have a wedge-shaped cross-section whose thickness gradually decreases toward the second discharge port 764, and the third die block 730 and the fourth die block 740 may each have a wedge-shaped cross-section whose thickness gradually decreases toward the third discharge port 774. However, the die blocks may have various shapes suitable for coating materials such as electrode active materials on the substrate.

The first slot 750 may be formed between the first die block 710 and the second die block 720 such that the first slot 750 slopes toward the second slot 760 as it approaches the first discharge port 754. The second slot 760 may be formed horizontally between the second die block 720 and the third die block 730. The third slot 770 may be formed between the third die block 730 and the fourth die block 740 such that the third slot 770 slopes toward the second slot 760 as it approaches the third discharge port 774. The shapes of the first slot 750, the second slot 760, and the third slot 770 may vary. If the three slots in the slot die coater 700 are gathered closer to one side, each slot may have various slopes based on the cross-section shown in FIG. 7.

The first discharge port 754 may be defined by a combination of the first die block 710, the second die block 720, and the first spacer 752. The second discharge port 764 may be defined by a combination of the second die block 720, the third die block 730, and the second spacer 762. The third discharge port 774 may be defined by a combination of the third die block 730, the fourth die block 740, and the third spacer 772. The first electrode active material (e.g., the first electrode active material forming the first electrode active material layer 220 of FIG. 2) may be discharged in a direction MD_1 of the first discharge port 754, obliquely with respect to the surface of the substrate EP. The second electrode active material (e.g., the second electrode active material forming the second electrode active material layer 230 of FIG. 2) may be discharged in a direction MD_2 of the second discharge port 764, perpendicular to the surface of the substrate EP. The blocking-layer slurry (e.g., the blocking-layer slurry forming the blocking layer 240 of FIG. 5) may be discharged in a direction MD_3 of the third discharge port 774, obliquely with respect to the surface of the substrate EP.

A transverse length of the first discharge port 754 (i.e., a length parallel to the surface of the substrate EP) may determine a width of an electrode active material layer coated on the substrate EP. The electrode active material layer may refer to a region where the electrode active material is applied on the substrate EP, e.g., the first electrode active material layer 220 illustrated in FIG. 2. As described below, the transverse length of the first discharge port 754 may vary depending on a structure of the first spacer 752. The second discharge port 764 may have at least two ports, and a spacing distance between the ports may vary depending on a structure of the second spacer 762. Likewise, the third discharge port 774 may have two or more ports, and a separation distance therebetween may vary depending on a structure of the third spacer 772.

The first slot 750 may be connected to a first chamber 712 that accommodates the electrode active material. The first chamber 712 may be formed in the second die block 720. Accordingly, the electrode active material accommodated in and supplied to the first chamber 712 may move into the first slot 750 and may be discharged in the direction (MD_1) of the first discharge port connected to the first slot 750 under pressure applied from the first chamber 712. For example, referring to FIGS. 2 and 7, the electrode active material accommodated in and supplied to the first chamber 712 may be the first electrode active material forming the first electrode active material layer 220.

Likewise, the second slot 760 may be connected to a second chamber 722 that accommodates the electrode active material. The second chamber 722 may be formed in the third die block 730. Accordingly, the electrode active material accommodated in and supplied to the second chamber 722 may move into the second slot 760 and may be discharged in the direction MD_2 of the second discharge port connected to the second slot 760 under pressure applied from the second chamber 722. For example, referring to FIGS. 2 and 7, the electrode active material accommodated in and supplied to the second chamber 722 may be the second electrode active material forming the second electrode active material layer 230.

Likewise, the third slot 770 may be connected to a third chamber 732 that accommodates the blocking-layer slurry. The third chamber 732 may be formed in the fourth die block 740. Accordingly, the blocking-layer slurry accommodated in and supplied to the third chamber 732 may move into the third slot 770 and be discharged in the direction MD_3 of the discharge connected to the third slot 770 under pressure applied by the third chamber 732. For example, referring to FIGS. 5 and 7, the blocking-layer slurry accommodated in and supplied to the third chamber 732 may be the blocking-layer slurry forming the blocking layer 240.

The first spacer 752 may be disposed in the first slot 750. The second spacer 762 may be disposed in the second slot 760. The third spacer 772 may be disposed in the third slot 770. Referring to FIG. 8, the first spacer 752 may be disposed between the first die block 710 and the second die block 720 to form the first slot 750. The second spacer 762 may be disposed between the second die block 720 and the third die block 730 to form the second slot 760. The third spacer 772 may be disposed between the third die block 730 and the fourth die block 740 to form the third slot 770.

The first spacer 752 may include an internal region I connected to (e.g., in fluid communication with) the first discharge port 754 and a base portion 752_1. The internal region I of the first spacer 752 may be open at the first discharge port 754 and may serve as a space accommodating the electrode active material. When the electrode active material is discharged through the first discharge port 754 and coated on the substrate EP, the internal region I of the first spacer 752 may be configured to define a width of the electrode active material layer applied. For example, a length of an open region at a side of the internal region I facing the first discharge port 754 may determine the width of the electrode active material layer. Referring to FIGS. 2 and 8, the electrode active material layer formed by the first spacer 752 may be the first electrode active material layer 220 formed by applying the first electrode active material. The base portion 752_1 of the first spacer 752 may protrude from the internal region I toward the first discharge port 754. A detailed structure of the base portion 752_1 is described below with reference to FIGS. 7-9.

The second spacer 762 may include a plurality of first pockets 762_1 and 762_2 connected to the second discharge port 764. The second spacer 762 may include the plurality of first pockets 762_1 and 762_2 such that the second discharge port 764 is formed at positions corresponding to the first pockets 762_1 and 762_2. The plurality of first pockets 762_1 and 762_2 may form the plurality of second slots 760. When the electrode active material accommodated in the plurality of first pockets 762_1 and 762_2 is discharged through the second discharge port 764 connected to the second slot 760, the plurality of first pockets 762_1 and 762_2 may induce the electrode active material to overlap at least partially with edge portions of the electrode active material layer formed by the first spacer 752. The edge portions formed by the first spacer 752 may correspond to both ends of the electrode active material layer, which may readily assume a sloped shape. More specifically, the first pockets 762_1 and 762_2 of the second spacer 762 may be disposed such that the electrode active material overlaps at least partially with each of the edge portions of the electrode active material layer formed by the first spacer 752. A detailed structure of the first pockets 762_1 and 762_2 of the second spacer 762 is described below with reference to FIGS. 7, 8, and 10. Referring to FIGS. 2 and 8, the electrode active material layer formed by the second spacer 762 may be the second electrode active material layer 230.

The third spacer 772 may include a plurality of second pockets 772_1 and 772_2 connected to the third discharge port 774. The third spacer 772 may include the plurality of second pockets 772_1 and 772_2 such that the third discharge port 774 is formed at positions corresponding to the second pockets 772_1 and 772_2. The plurality of second pockets 772_1 and 772_2 may form the plurality of third slots 770. When the blocking-layer slurry accommodated in the plurality of second pockets 772_1 and 772_2 is discharged through the third discharge port 774 connected to the third slot 770, the plurality of second pockets 772_1 and 772_2 may induce the blocking-layer slurry to overlap at least partially with edge portions of the electrode active material layer formed by the second spacer 762. The edge portions of the electrode active material layer refer to both ends of the electrode active material layer, which may readily assume a sloped shape. More specifically, the second pockets 772_1 and 772_2 of the third spacer 772 may be disposed such that the blocking-layer slurry overlaps at least partially with each of the edge portions of the electrode active material layer formed by the second spacer 762. A detailed structure of the second pockets 772_1 and 772_2 of the third spacer 772 is described below with reference to FIGS. 7, 8, and 11. For example, the blocking-layer slurry applied by the third spacer 772 may form the blocking layer 240 illustrated in FIG. 5.

By disposing the first spacer 752 and the second spacer 762, the second discharge port 764 may overlap at least partially with both ends of the first discharge port 754. For example, each second discharge port 764 may be disposed such that at least a portion thereof overlaps an end of the first discharge port 754, so that an electrode active material layer formed of an electrode active material different from the electrode active material layer coated from the first discharge port 754 is formed. A length of an overlapping region between the first discharge port 754 and the second discharge port 764 may be about 0 mm to about 1 mm.

By disposing the second spacer 762 and the third spacer 772, the third discharge port 774 may overlap at least partially with both ends of the second discharge port 764. For example, each third discharge port 774 may be disposed such that at least a portion thereof overlaps an end of the second discharge port 764, so that the blocking layer 240, for example, is formed. A length of an overlapping region between the second discharge port 764 and the third discharge port 774 may be about 0 mm to about 1 mm.

For example, the first slot 750 may be disposed above the second slot 760. In another example, the second slot 760 may be disposed above the first slot 750. Likewise, the second slot 760 may be disposed above the third slot 770, or the third slot 770 may be disposed above the second slot 760.

As described above, by simultaneously discharging the different electrode active materials and the blocking-layer slurry onto the substrate EP using the slot die coater 700, a substrate having the blocking layer disposed on the edge portions of the electrode active material layer may be manufactured. Bulging or depression at the edge portions of the electrode active material layer may thus be mitigated, so the electrode active material layer may be formed on the substrate EP at a relatively uniform thickness. Moreover, the second electrode active material (e.g., the second electrode active material forming the second electrode active material layer 230 of FIG. 2) discharged from the second slot 760 may be simultaneously discharged and coated with the electrode active material (e.g., the first electrode active material forming the first electrode active material layer 220 of FIG. 2) discharged from the first slot 750 onto the substrate EP. When the substrate EP is a negative-electrode substrate, the electrode active material discharged from the first slot 750 may be graphite, and the electrode active material discharged from the second slot 760 may be a silicon-carbon nanocomposite or silicon oxide. Accordingly, the electrode active material discharged from the second slot 760 may compensate a loss in N/P ratio that occurs when the electrode active material discharged from the first slot 750 is coated on the substrate EP, thereby preventing lithium precipitation and a resulting short circuit of the electrode.

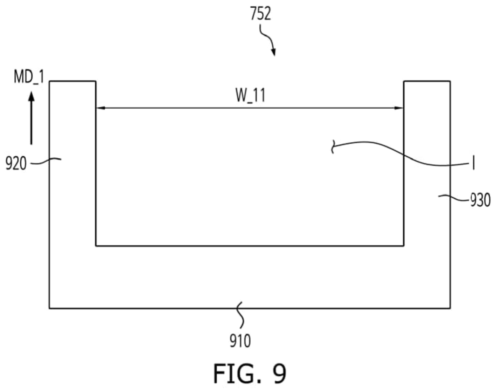

FIG. 9 is a schematic diagram illustrating the first spacer 752 according to some embodiments of the present disclosure. Referring to FIG. 9, the first spacer 752 may include a base portion 910 and extension portions 920 and 930. The base portion 910 may be a farthest portion of the first spacer 752 from the first discharge port (e.g., 754 of FIG. 7). The plurality of extension portions 920 and 930 may extend from one side of the base portion 910 toward the direction MD_1 of the first discharge port 754. The arrangement of the plurality of extension portions 920 and 930 and an interval W_11 between adjacent extension portions may vary depending on a design of a width of the electrode active material layer to be manufactured.

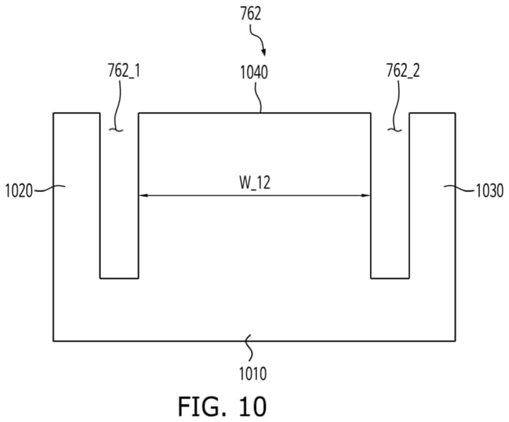

FIG. 10 is a schematic diagram illustrating the second spacer 762 according to some embodiments of the present disclosure. The second spacer 762 differs from the first spacer 752 illustrated in FIG. 9, and only configurations different therefrom are described below. Referring to FIG. 10, a shape and size of the second spacer 762 according to an embodiment may be substantially the same as a shape and size of a face of the second die block 720 and the third die block 730 that face each other in the slot die coater 700, for example. The second spacer 762 may be a substantially rectangular plate-shaped member.

In addition, the second spacer 762 may include the plurality of pockets 762_1 and 762_2 open toward the second discharge port (e.g., 764 of FIG. 7). The plurality of pockets 762_1 and 762_2 may be disposed to correspond to edge portions of the electrode active material layer formed by the first spacer (e.g., 752 of FIG. 7). The plurality of pockets 762_1 and 762_2 may extend in a direction opposite the second discharge port 764 (e.g., in a negative MD_2 direction).

The second spacer 762 may include the first pocket 762_1 and the second pocket 762_2, both open toward the direction MD_2 of the second discharge port 764. The electrode active material accommodated in the first pocket 762_1 and the second pocket 762_2 may be discharged in the direction MD₂ of the second discharge port 764, respectively, and an electrode active material layer (e.g., the second electrode active material layer 230 of FIG. 2) formed thereby may be disposed at edge portions of the electrode active material layer (e.g., the first electrode active material layer 220 of FIG. 2) formed by the first spacer 752. An interval W₁₂ between the plurality of pockets 762_1 and 762_2 may vary depending on a design of a width of the electrode active material layer to be manufactured.

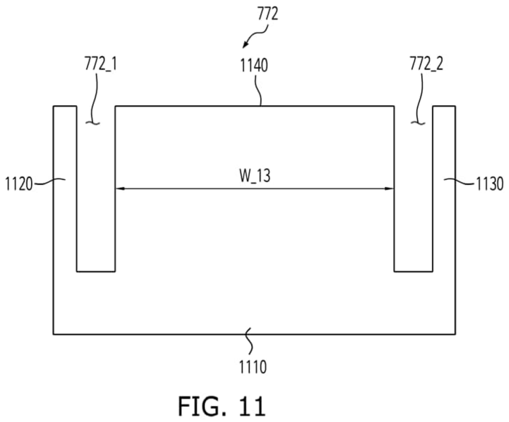

FIG. 11 is a schematic diagram illustrating the third spacer 772 according to some embodiments of the present disclosure. Configurations different from those of the second spacer 762 of FIG. 10 will be mainly described. Referring to FIG. 11, a shape and size of the third spacer 772 according to an embodiment may be substantially the same as a shape and size of a face of the third die block (e.g., 730 of FIG. 7) and the fourth die block (e.g., 740 of FIG. 7) that face each other in the slot die coater (e.g., 700 of FIG. 7). The third spacer 772 may be a substantially rectangular plate-shaped member.

The third spacer 772 may also include the plurality of pockets 772_1 and 772_2 open toward the third discharge port (e.g., 774 of FIG. 7). The plurality of pockets 772_1 and 772_2 may be disposed to correspond to edge portions of the electrode active material layer formed by the second spacer (e.g., 762 of FIG. 7). The plurality of pockets 772_1 and 772_2 may extend in a direction opposite the third discharge port 774 (e.g., in a negative MD₃ direction).

The third spacer 772 may include the first pocket 772_1 and the second pocket 772_2, both open toward the third discharge port direction (e.g., the direction MD_3 of the third discharge port in FIG. 7). The blocking-layer slurry accommodated in the first pocket 772_1 and the second pocket 772_2 may be discharged in the direction MD_3 of the third discharge port 774, respectively, and a blocking layer (e.g., the blocking layer 240 of FIG. 5) formed thereby may be disposed at the edge portions of the formed electrode active material layer (e.g., the second electrode active material layer 230 of FIG. 5) formed by the second spacer 762. An interval W_13 between the plurality of pockets 772_1 and 772_2 may vary depending on the design of the width length of the electrode active material layer to be manufactured.

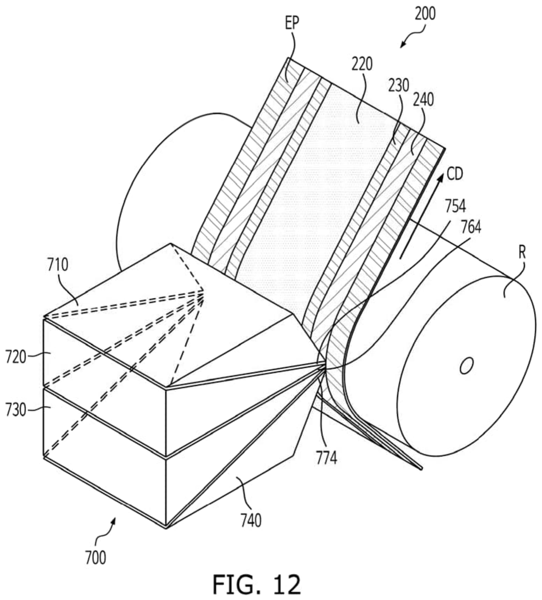

FIG. 12 is a schematic perspective view illustrating the slot die coater 700 and the electrode 200 for a secondary battery according to some embodiments of the present disclosure. The electrode 200 for a secondary battery may be manufactured using the slot die coater 700 described above. Detailed descriptions and embodiments of respective configurations of the electrode 200 for a secondary battery and the slot die coater 700 are provided in FIGS. 1-11, and redundant description will be omitted herein.

Referring to FIG. 12, the electrode 200 for a secondary battery may include the substrate EP, the first electrode active material layer 220, the second electrode active material layer 230, and the blocking layer 240. The substrate EP may be substantially the same as the substrate described with reference to FIGS. 1 to 6. The first electrode active material layer 220 and the second electrode active material layer 230 may be formed by applying the first and second electrode active materials discharged through the first discharge port 754 and the second discharge port 764 of the slot die coater 700 on the substrate EP. The blocking layer 240 may be formed by applying the blocking-layer slurry discharged through the third discharge port 774 of the slot die coater 700 on the substrate EP. The substrate EP may be coated along a rotation direction CD of the roll R.

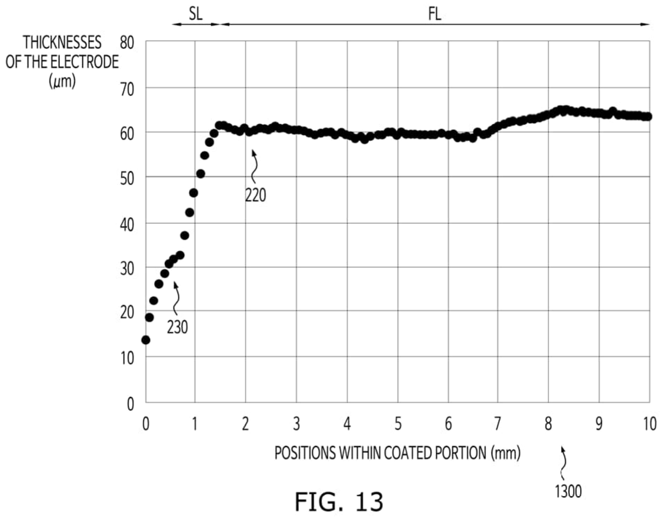

FIG. 13 is a graph 1300 showing thickness measurements of an electrode for a secondary battery manufactured using a slot die coater according to some embodiments of the present disclosure. The electrode for a secondary battery may correspond to the electrode 200 illustrated in FIG. 2. An X-axis of the graph represents positions (mm) within the coated portion (e.g., the coated portion 212 of FIG. 2), and a Y-axis represents thicknesses (µm) of the electrode. Positions within the coated portion are indicated in terms of a length from one edge portion of the coated portion, and the electrode thickness means a total thickness of the substrate and the coated portion. Only a central region of the coated portion is shown for clarity.

Referring to FIG. 13, the second electrode active material layer 230 may be formed on one side of the first electrode active material layer 220. The second electrode active material layer 230 may overlap at least partially with the first electrode active material layer 220 at the sloped portion SL. For example, as shown, a thickness of the second electrode active material layer 230 may be about 40 % of the thickness of the first electrode active material layer 220.

In an embodiment, the electrode for a secondary battery may function as a negative electrode. The first electrode active material forming the first electrode active material layer 220 may include graphite. The second electrode active material forming the second electrode active material layer 230 may include at least one selected from a silicon-carbon nanocomposite (SCN) and silicon oxide (SiOₓ). Thus, even if a thickness of the second electrode active material layer 230 is smaller than a thickness of the first electrode active material layer 220, a capacity of the second electrode active material forming the second electrode active material layer 230 may be greater than a capacity of the first electrode active material forming the first electrode active material layer 220. Accordingly, a loss in N/P ratio occurring during coating of the first electrode active material layer 220 may be compensated by the second electrode active material layer 230, thereby preventing lithium precipitation and a resulting short circuit that may occur in the negative electrode.

By way of summation and review, in the process of applying the slurry to the electrode substrate, the slurry may be discharged from a coater while the coater moves along a desired coating region to apply the slurry at a constant thickness. Ideally, the electrode active material is applied only in a desired pattern at the desired region; however, such ideal coating may not be realized in an actual production line. At a boundary between a non-coated portion where no electrode active material is applied and a coated portion where the electrode active material is applied, the slurry may not be neatly applied, and dragging, bulging, or depression may occur. Consequently, at the boundary, a length deviation of the coated portion may occur, and lithium precipitation and a resulting short circuit may occur because an N/P ratio between the positive electrode and the negative electrode is distorted due to a local increase or decrease in loading level (L/L).

The N/P ratio may refer to a ratio of a capacity per unit area of the negative electrode to a capacity per unit area of the positive electrode. Typically, a lithium secondary battery is manufactured such that the negative electrode has a higher loading level and a larger plate area than the positive electrode, so that lithium ions derived from the positive electrode are prevented from precipitating as lithium metal on the negative electrode, thereby preventing a short circuit between the positive electrode and the negative electrode. However, in a typical coating process, the capacity of the negative electrode may decrease at the boundary between the coated portion and the non-coated portion, causing the N/P ratio to deviate from the designed value.

In contrast, the present disclosure provides an electrode for a secondary battery where an N/P ratio deviation caused by a coating-thickness deviation of a coated portion may be compensated by a high-content SCN slurry, thereby preventing lithium precipitation and a resulting short circuit of the electrode. That is, according to some embodiments of the present disclosure, in an electrode formed by applying an electrode active material slurry and a blocking-layer slurry using a slot die coater, bulging or depression of the electrode active material layer in a width direction of the electrode for a secondary battery may be suppressed, thereby reducing a possibility of deterioration of electrode quality, a possibility of a short circuit of the secondary battery, and/or a possibility of fire.

However, aspects and features of the present disclosure are not limited to those described above, and other aspects and features not mentioned will be clearly understood by a person skilled in the art from the detailed description, described above.

Although the present disclosure has been described with reference to embodiments and drawings illustrating aspects thereof, the present disclosure is not limited thereto. Various modifications and changes may be made by those skilled in the art without departing from the spirit and scope of the present disclosure defined by the claims and their equivalents.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

## Claims

1. An electrode (200) for a secondary battery, comprising:
a substrate (210);
a first electrode active material layer (220) on at least one surface of the substrate (210), the first electrode active material layer (220) including a first electrode active material, and the first electrode active material including at least one of crystalline carbon, amorphous carbon, or combinations thereof; and
a second electrode active material layer (230) on at least one side of the first electrode active material layer (220), the second electrode active material layer including a second electrode active material (230), and the second electrode active material including at least one of silicon-carbon nanocomposite or silicon oxide.

2. The electrode (200) as claimed in claim 1, wherein the first electrode active material layer (220) includes:
a flat portion (FL) having a thickness within a predetermined range; and
a sloped portion (SL) having a thickness that decreases toward the at least one surface of the substrate (210) from the flat portion (FL), the second electrode active material layer (230) being adjacent to the sloped portion (SL).

3. The electrode (200) as claimed in claim 2, wherein the second electrode active material layer (230) covers at least a part of the sloped portion (SL).

4. The electrode (200) as claimed in any one of claims 1 to 3, wherein the second electrode active material (230) includes silicon in an amount ranging from 30 wt% to 50 wt%, based on 100 wt% of the second electrode active material.

5. The electrode (200) as claimed in any one of claims 1 to 4, wherein a maximum thickness (W2) of the second electrode active material layer (230) is less than a maximum thickness (W1) of the first electrode active material layer (220).

6. The electrode (200) as claimed in any one of claims 1 to 5, wherein a product of an average thickness of the second electrode active material layer (230) and a capacity of the second electrode active material is equal to or greater than a product of an average thickness of the first electrode active material layer (220) and a capacity of the first electrode active material.

7. The electrode (200) as claimed in any one of claims 1 to 6, further comprising a blocking layer (240) on one side of the second electrode active material layer (230), the blocking layer (240) including a blocking-layer slurry.

8. The electrode (200) as claimed in claim 7, wherein the blocking-layer slurry (240) includes carboxymethyl cellulose.

9. The electrode (200) as claimed in claim 7 or 8, wherein the blocking layer (240) includes the blocking-layer slurry without moisture.

10. The electrode (200) as claimed in any one of claims 7 to 9, wherein the blocking-layer slurry has a solid content of 1 wt% to 10 wt%, based on a total weight of the blocking layer slurry.

11. The electrode (200) as claimed in any one of claims 7 to 10, wherein a maximum thickness (W3) of the blocking layer (240) is less than a maximum thickness (W2) of the second electrode active material layer (230).

12. A secondary battery (100), comprising:
an electrode assembly (110) including a positive electrode (114), a negative electrode (112), and a separator (116) between the positive electrode (114) and the negative electrode (112); and
a case (130) accommodating the electrode assembly (110),
wherein the negative electrode (112) includes the electrode (200) according to any one of claims 1 to 11.

13. The secondary battery (100) of claim 12, wherein the case (130) is a pouch-type case.

14. The secondary battery (100) of claim 12 or 13, wherein the electrode assembly (110) is wound with the separator (116) interposed between the positive electrode (114) and the negative electrode (112).

15. The secondary battery (100) of any one of claims 12 to 14, further comprising a first electrode tab (122) connected to a non-coated portion of the negative electrode (112) and a second electrode tab (124) connected to a non-coated portion of the positive electrode (114), the first and second electrode tabs (122, 124) being welded respectively to lead tabs (142, 144) and insulated from the case (130) by tab films.
